# EUROPEAN PATENT APPLICATION

(11) **EP 4 333 153 A1**
(43) Date of publication of application: **06.03.2024**
(21) Application number: 22795542.4
(22) Date of filing: 06.04.2022
(51) Int. Cl.: H01M 10/0587, H01M 50/434, H01M 50/443, H01M 50/451, H01M 50/46, H01M 50/463

(54) **NON-AQUEOUS ELECTROLYTE SECONDARY BATTERY**

(30) Priority: 26.04.2021 JP 2021073995
(71) Applicant: Panasonic Energy Co., Ltd., Osaka 570-8511 (JP)
(72) Inventor: KASAMATSU Shinji, Osaka 571-0057 (JP); KITTA Kazuki, Osaka 571-0057 (JP)
(74) Representative: Novagraaf International SA
(86) International application number: PCT/JP2022/017147
(87) International publication number: WO 2022/230626

(57) **Abstract**

The present invention provides a non-aqueous electrolyte secondary battery that makes it possible to obtain improved productivity while reducing electrode plate deformation. A non-aqueous electrolyte secondary battery according to the present disclosure comprises: an electrode body in which a positive electrode and a negative electrode are wound via a separator therebetween; a non-aqueous electrolyte; and an outer case in which the electrode body and the non-aqueous electrolyte are contained. The positive electrode includes a positive electrode current collector, and a positive electrode mixture layer formed on a surface of the positive electrode current collector. The surface of the separator opposite the positive electrode mixture layer includes a high friction region formed in an area of less than six turns in a winding direction from a position opposite the winding inner end of the positive electrode mixture layer, and a low friction region adjacent to the high friction region.

## Description

### TECHNICAL FIELD

The present disclosure relates to a non-aqueous electrolyte secondary battery.

### BACKGROUND ART

In recent years, non-aqueous electrolyte secondary batteries comprising an electrode assembly in which a positive electrode and a negative electrode are disposed opposite to each other with a separator interposed therebetween have been widely used as secondary batteries with high output and high energy density.

For example, Patent Literature 1 discloses art of setting a surface of a separator to have a coefficient of static friction of less than or equal to 0.45 in order to improve of falling of a winding core when a wound electrode assembly is produced.

### CITATION LIST

### PATENT LITERATURE

PATENT LITERATURE 1: Japanese Unexamined Patent Application Publication No. 2011-126275

### SUMMARY

### TECHNICAL PROBLEM

In a non-aqueous electrolyte secondary battery in which a wound electrode assembly is housed in an exterior, expansion of the electrode assembly with charge-discharge cycles may apply pressure from the exterior to the electrode assembly, causing electrode plate deformation that is bending of an electrode plate constituting the electrode assembly. Since the electrode plate deformation can be a cause of internal short circuit, it is important challenge to inhibit the electrode plate deformation.

The present inventors have made intensive investigation, and consequently found that the electrode plate deformation is likely to occur in a range of several windings in a winding direction from an inner winding end of a positive electrode mixture layer, and at this time, a positive electrode and a separator each bend with deformation in the winding direction. Thus, when a surface of the separator has a small friction coefficient, an amount of deformation of the positive electrode tends to be large. It has been found that, when a surface of the separator has a large friction coefficient, a feeding roller adheres to the separator with winding the electrode assembly to cause winding deviation of the separator, which may decrease productivity of the battery.

It is an object of the present disclosure to inhibit the electrode plate deformation and improve the productivity in the non-aqueous electrolyte secondary battery.

### SOLUTION TO PROBLEM

A non-aqueous electrolyte secondary battery according to the present disclosure comprises: an electrode assembly in which a positive electrode and a negative electrode are wound with a separator interposed therebetween; and an exterior housing the electrode assembly, wherein the positive electrode has a positive electrode current collector and a positive electrode mixture layer formed on a surface of the positive electrode current collector, and a surface of the separator facing the positive electrode mixture layer includes: a high-friction region formed within a range of two or more windings and less than six windings in a winding direction from a position facing an inner winding end of the positive electrode mixture layer; and a low-friction region adjacent to the high-friction region in the winding direction.

### ADVANTAGEOUS EFFECT OF INVENTION

According to the non-aqueous electrolyte secondary battery according to the present disclosure, both of inhibition of the electrode plate deformation and improvement of the productivity may be achieved.

### BRIEF DESCRIPTION OF DRAWING

FIG. 1 is a vertical sectional view of a cylindrical secondary battery of an example of an embodiment.
FIG. 2 is a transverse sectional view of a cylindrical secondary battery of an example of an embodiment.
FIG. 3 is a view for describing a method for evaluating deformation of a negative electrode.

### DESCRIPTION OF EMBODIMENTS

Hereinafter, an example of the embodiment of a non-aqueous electrolyte secondary battery according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The shape of the exterior is not limited to the cylindrical shape, and may be, for example, a rectangular shape, a coin shape, or the like. The exterior may be a pouch composed of laminated sheets including a metal layer and a resin layer.

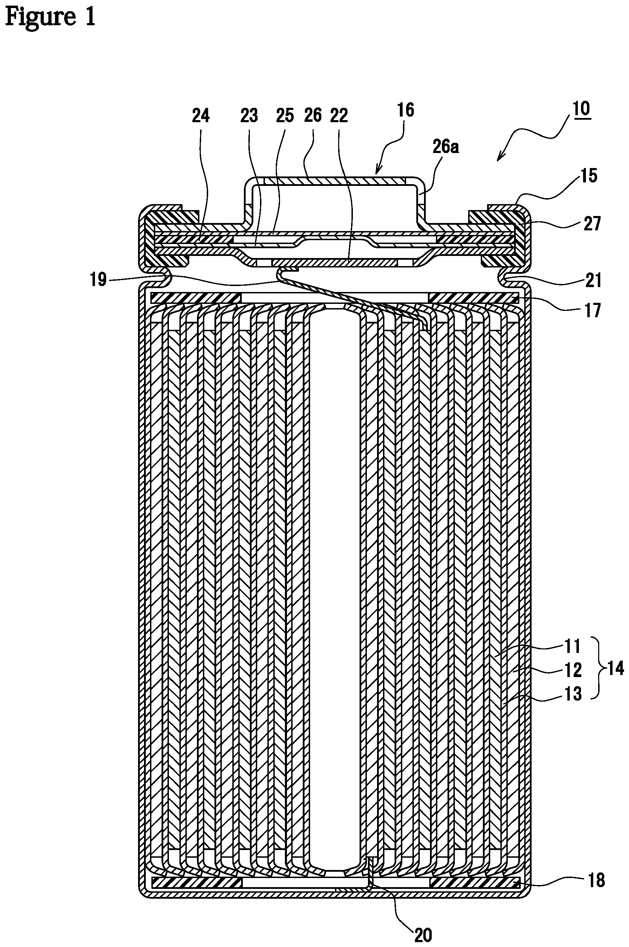

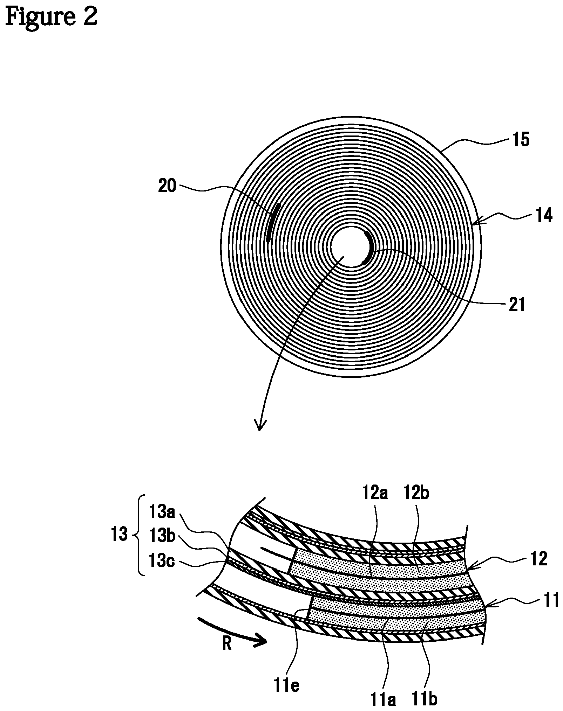

FIG. 1 is a vertical sectional view of a cylindrical secondary battery 10 of an example of an embodiment. FIG. 2 is a transverse sectional view of the cylindrical secondary battery 10 of an example of an embodiment. In the secondary battery 10, an electrode assembly 14 and a non-aqueous electrolyte (not illustrated) are housed in an exterior 15, and an upper end of the exterior 15 is capped with a sealing assembly 16 to seal an inside of the secondary battery 10. Hereinafter, for convenience of description, the sealing assembly 16 side will be described as the "upper side", and the bottom side of the exterior 15 will be described as the "lower side".

As a non-aqueous solvent (organic solvent) of the non-aqueous electrolyte, carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As an electrolyte salt of the non-aqueous electrolyte, LiPF₆, LiBF₄, LiCF₃SO₃, or the like, or a mixture thereof may be used. An amount of the electrolyte salt to be dissolved in the non-aqueous solvent may be, for example, greater than or equal to 0.5 mol/L and less than or equal to 2.0 mol/L.

As illustrated in FIG. 2, the electrode assembly 14 has a wound structure in which a positive electrode 11 and a negative electrode 12 are wound with a separator 13 interposed therebetween. The number of windings of the electrode assembly is, for example, greater than or equal to 10 and less than or equal to 30 on a basis of the positive electrode 11. The positive electrode 11, the negative electrode 12, and the separator 13 all have a band shape, and wound in a longitudinal direction, for example. To prevent precipitation of lithium, the negative electrode 12 is formed to be one size larger than the positive electrode 11, and formed to be longer than the positive electrode 11 in the longitudinal direction and a short direction (vertical direction), for example. To prevent electric contact between the positive electrode 11 and the negative electrode 12, the separator 13 is preferably formed, as exemplified in FIG. 2, to be larger than the positive electrode 11 and the negative electrode 12 in both width and length.

In the present embodiment, an inner winding end 11e of a positive electrode mixture layer 11b coincides with an inner winding end of the positive electrode 11. Meanwhile, an inner winding end of a negative electrode mixture layer 12b does not coincide with an inner winding end of the negative electrode 12, and an exposed portion where a negative electrode mixture layer 12b is not formed and a negative electrode current collector 12a is exposed is provided on the inner winding end of the negative electrode 12. A negative electrode lead 20 is welded with this exposed portion. On the positive electrode 11, an exposed portion where the positive electrode current collector 11a is exposed is provided on a central portion in the longitudinal direction, and a positive electrode lead 19 is welded with this exposed portion. The exposed portion may be provided on an outer winding end of the negative electrode 12, and the negative electrode lead 20 may be connected to this exposed portion. Alternatively, this exposed portion may be contacted with an inner surface of the exterior 15 to make electric connection between the negative electrode 12 and the exterior 15.

As illustrated in FIG. 1, insulating plates 17 and 18 are provided on an upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom of the exterior 15. In the secondary battery 10, the exterior 15 becomes a negative electrode terminal. When the negative electrode lead 20 is provided on an outer end of winding, the negative electrode lead 20 extends through an outside of the insulating plate 18 toward the bottom side of the exterior 15, and welded with a bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, and the separator 13, which constitute the electrode assembly 14, particularly the separator 13, will be described in detail.

### [Positive Electrode]

The positive electrode 11 has a positive electrode current collector 11a and a positive electrode mixture layer 11b formed on a surface of the positive electrode current collector 11a. As illustrated in FIG. 2, the positive electrode mixture layer 11b is preferably formed on both surfaces of the positive electrode current collector 11a. For the positive electrode current collector 11a, a foil of a metal stable within a potential range of the positive electrode 11, such as aluminum, a film in which such a metal is disposed on a surface layer, or the like may be used. The positive electrode mixture layer 11b includes, for example, a positive electrode active material, a binder, a conductive agent, and the like. The positive electrode 11 may be produced by, for example, applying a positive electrode mixture slurry including the positive electrode active material, the binder, the conductive agent, and the like on the positive electrode current collector 11a, and drying and subsequently rolling the coating to form the positive electrode mixture layers 11b on both the surfaces of the positive electrode current collector 11a.

Examples of the positive electrode active material included in the positive electrode mixture layer 11b may include a lithium-transition metal oxide containing a transition metal element such as Co, Mn, and Ni. The lithium-transition metal oxide is, for example, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M; at least one ofNa, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or as a mixture thereof. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). On particle surfaces of the lithium-transition metal oxide, particles of an inorganic substance such as tungsten oxide, aluminum oxide, and a lanthanoid-containing compound, may adhere.

Examples of the conductive agent included in the positive electrode mixture layer 11b may include carbon materials such as carbon black (CB), acetylene black (AB), Ketjenblack, carbon nanotube (CNT), graphene, and graphite. These may be used singly, or in combination of two or more.

Examples of the binder included in the positive electrode mixture layer 11b may include fluororesins such as polytetrafluoroethylene (PTFE) and polyvinylidene fluoride (PVDF), polyacrylonitrile (PAN), polyimide resins, acrylic resins, and polyolefin resins. These may be used singly, or in combination of two or more. With these resins, carboxymethylcellulose (CMC) or a salt thereof, polyethylene oxide (PEO), and the like may be used in combination.

### [Negative Electrode]

The negative electrode 12 has a negative electrode current collector 12a and a negative electrode mixture layer 12b formed on a surface of the negative electrode current collector 12a. As illustrated in FIG. 2, the negative electrode mixture layer 12b is preferably formed on both surfaces of the negative electrode current collector 12a. As the negative electrode current collector 12a, a foil of a metal stable within a potential range of the negative electrode, such as copper and a copper alloy, a film in which such a metal is disposed on a surface layer, or the like may be used. The negative electrode mixture layer 12b includes, for example, a negative electrode active material, a binder, and the like. The negative electrode 12 may be produced by, for example, applying a negative electrode mixture slurry including the negative electrode active material, the binder, and the like on the negative electrode current collector 12a, and drying and subsequently rolling the coating to form the negative electrode mixture layers 12b on both the surfaces of the negative electrode current collector 12a.

The negative electrode active material included in the negative electrode mixture layer 12b is not particularly limited as long as it may reversibly occlude and release lithium ions, and a carbon-based active material such as graphite is typically used. The graphite may be any of: a natural graphite such as flake graphite, massive graphite, and amorphous graphite; and an artificial graphite such as massive artificial graphite and graphitized mesophase-carbon microbead. As the negative electrode active material, a metal that forms an alloy with Li, such as Si or Sn, a metal compound including Si, Sn, or the like, a lithium-titanium composite oxide, or the like may be used. As a negative electrode active material other than the carbon-based active material, a silicon-based active material is preferable. Examples of the silicon-based active material include: a Si-containing compound represented by SiOₓ (0.5 ≤ x ≤ 1.6); or a Si-containing compound in which Si fine particles are dispersed in a lithium silicate phase represented by Li_{2y}SiO_{(2+y)} (0 < y < 2). A content of the silicon-based active material in the negative electrode mixture layer 12b is, for example, greater than or equal to 1 mass% and less than or equal to 15 mass%, and preferably greater than or equal to 5 mass% and less than or equal to 10 mass% relative to a total mass of the negative electrode active material.

On particle surfaces of the silicon-based active material, a conductive coating is preferably formed. Examples of a constituent material of the conductive coating may include at least one selected from a carbon material, a metal, and a metal compound. Among them, a carbon material such as amorphous carbon is preferable. The carbon coating may be formed by: a CVD method using acetylene, methane, or the like; a method of mixing coal pitch, petroleum pitch, a phenol resin, or the like with the particles of the silicon-based active material to be subjected to heat treatment; or the like, for example. The conductive coating may also be formed by adhering a conductive filler, such as carbon black, to the particle surfaces of the silicon-based active material by using a binder.

As the binder included in the negative electrode mixture layer 12b, a fluorine-containing resin such as PTFE and PVDF, PAN, a polyimide, an acrylic resin, a polyolefin, or the like may be used as in the case of the positive electrode, but styrene-butadiene rubber (SBR) is preferably used. The negative electrode mixture layer may include CMC or a salt thereof, polyacrylic acid (PAA) or a salt thereof, polyvinyl alcohol (PVA), or the like. The negative electrode mixture layer includes, for example, SBR; and CMC or a salt thereof.

### [Separator]

A surface of the separator 13 facing the positive electrode mixture layer 11b includes: a high-friction region formed within a range of two or more windings and less than six windings in a winding direction R from a position facing the inner winding end 11e of the positive electrode mixture layer 11b; and a low-friction region adjacent to the high-friction region in the winding direction R. According to this, the high-friction region may inhibit bending of the positive electrode, and the low-friction region may inhibit winding deviation of the separator.

A friction coefficient of the high-friction region is preferably greater than or equal to 0.6. An upper limit value of the friction coefficient of the high-friction region is, for example, 1.1 from the viewpoint of feeding stability of the separator when the separator is wound. A friction coefficient of the low-friction region is preferably less than or equal to 0.4. A lower limit value of the friction coefficient of the low-friction region is, for example, 0.1 from the viewpoint of prevention of deviation of the separator with a feeding reel.

The separator 13 has: a porous substrate 13a; and an inorganic particle layer formed on a surface of the substrate 13a and including inorganic particles, for example. In the present embodiment illustrated in FIG. 2, the separator 13 has, on a surface facing the positive electrode mixture layer 1 1b, a first inorganic particle layer 13b formed on the surface of the substrate 13a and a second inorganic particle layer 13c formed on a surface of the first inorganic particle layer 13b (hereinafter, the first inorganic particle layer 13b and the second inorganic particle layer 13c may be collectively referred to as the inorganic particle layer). In FIG. 2, the first inorganic particle layer 13b is formed on the entire surface of the separator 13 facing the positive electrode mixture layer 11b. The second inorganic particle layer 13c is formed on the surface of the first inorganic particle layer 13b within a range of two or more windings and less than six windings in a winding direction R from a position facing the inner winding end 11e of the positive electrode mixture layer 11b. That is, the surface of the first inorganic particle layer 13b is the low-friction region, and the surface of the second inorganic particle layer 13c is the high-friction region. The first inorganic particle layer 13b and the second inorganic particle layer 13c may be produced by, for example, a micro gravure coating method. The separator 13 may be produced by: applying a dispersion including inorganic particles to form the first inorganic particle layer 13b on the surface of the substrate 13a; and then intermittently applying the dispersion including the inorganic particles to form the first inorganic particle layer 13b with again the micro gravure coating method.

The constitution of the inorganic particle layer on the surface of the substrate 13a is not limited to the example in FIG. 2. For example, the second inorganic particle layer 13c may be formed on not the surface of the first inorganic particle layer 13b but the surface of the substrate 13a. The separator 13 may have the inorganic particle layers on both of the surface facing the positive electrode mixture layer 11b and the surface facing the negative electrode mixture layer 12b, but preferably has the inorganic particle layer only on the surface facing the positive electrode mixture layer 11b from the viewpoint of the productivity.

The substrate 13a is a porous sheet having an ion permeation property and an insulation property, and composed of a fine porous thin film, a woven fabric, a nonwoven fabric, or the like, for example. A material of the substrate 13a is not particularly limited, and examples thereof may include polyolefins such as polyethylene, polypropylene, and a copolymer of polyethylene and an α-olefin, acrylic resins, polystyrene, a polyester, cellulose, a polyimide, polyphenylene sulfide, a polyether ether ketone, and a fluororesin. The substrate 13a made of a polyolefin may be oxidatively deteriorated due to exposure to the potential of the positive electrode 11, but the inorganic particle layer formed on the surface of the substrate 13a facing the positive electrode mixture layer 11b effectively inhibits the oxidative deterioration of the substrate 13a. Furthermore, the inorganic particle layer improves heat resistance of the separator 13.

The inorganic particle layer is a porous layer made of inorganic particles as a main component. Examples of the inorganic particles included in the inorganic particle layer include metal oxide particles, metal nitride particles, metal fluoride particles, and metal carbide particles.

Examples of the metal oxide particles include aluminum oxide, titanium oxide, magnesium oxide, zirconium oxide, nickel oxide, silicon oxide, and manganese oxide. Examples of the metal nitride oxide particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide.

The inorganic particles may be porous aluminosilicate salts such as zeolite (M_{2/n}O·Al₂O₃·xSiO₂·yH₂O, wherein M represents a metal element, "n" represents a valency of M, x ≥ 2, and y ≥ 0), layered silicate salts such as talc (Mg₃Si₄O₁₀(OH)₂), and minerals such as barium titanate (BaTiO₃) and strontium titanate (SrTiO₃). These may be used singly, or in combination of two or more. A content of the inorganic particles included in the inorganic particle layer is preferably greater than or equal to 85 mass% and less than or equal to 99 mass%, and more preferably greater than or equal to 90 mass% and less than or equal to 98 mass% relative to a total mass of the inorganic particle layer.

An average particle diameter (D50) of the inorganic particles included in the second inorganic particle layer 13c (high-friction region) is preferably less than or equal to 0.3 µm from the viewpoint of improvement of adhesion to the opposite positive electrode mixture layer 1 1b. The D50 herein means a particle diameter at which a cumulative frequency is 50% from a smaller particle diameter side in a particle size distribution on a volumetric basis. The particle size distribution of the inorganic particles may be measured by using a laser diffraction-type particle size distribution measuring device (for example, MT3000II, manufactured by MicrotracBEL Corp.) with water as a dispersion medium. A lower limit value of the D50 of the inorganic particles included in the second inorganic particle layer 13c is, for example, 0.1 µm from the viewpoint of inhibition of aggregation of the inorganic particles in a dispersion.

An average particle diameter (D50) of the inorganic particles included in the first inorganic particle layer 13b (low-friction region) is preferably greater than or equal to 0.6 µm from the viewpoint of improvement of smoothness with a feeding roller. An upper limit value of the D50 of the inorganic particles included in the first inorganic particle layer 13b is, for example, 1.5 µm from the viewpoint of inhibition of peeling of the first inorganic particle layer 13b.

A thickness of the first inorganic particle layer 13b is preferably smaller than a thickness of the substrate 13a, and is, for example, greater than or equal to 0.5 µm and less than or equal to 5 µm. A thickness of the second inorganic particle layer 13c is, for example, greater than or equal to 0.5 µm and less than or equal to 5 µm.

The inorganic particle layer preferably further includes a binder. The binder has a function of bonding between the inorganic particles and between the inorganic particles and the substrate 13a. An example of the binder is a fluororesin such as polyvinylidene fluoride (PVDF) and polytetrafluoroethylene (PTFE), a polyimide resin, an acrylic resin, a polyolefin resin, styrene-butadiene rubber (SBR), nitrile-butadiene rubber (NBR), carboxymethylcellulose (CMC) or a salt thereof, or polyvinyl alcohol (PVA). These may be used singly, or in combination of two or more. A content of the binder included in the inorganic particle layer is preferably greater than or equal to 0.5 mass% and less than or equal to 10 mass%, and more preferably greater than or equal to 1 mass% and less than or equal to 5 mass% relative to the total mass of the inorganic particle layer.

Although the friction coefficients of the first inorganic particle layer 13b and second inorganic particle layer 13c are preferably regulated with the average particle diameters of the inorganic particles as the above examples, they may be regulated with shapes and materials of the inorganic particles, types and amounts of the binder and the like.

### EXAMPLES

Hereinafter, the present disclosure will be further described with Examples, but the present disclosure is not limited to these Examples.

### <Example 1>

### [Production of Positive Electrode]

Mixing 100 parts by mass of LiNi_{0.88}Co_{0.09}Al_{0.03}O₂, 1 part by mass of acetylene black (AB), and 0.9 parts by mass of polyvinylidene fluoride (PVDF) was performed, and an appropriate amount of N-methyl-2-pyrrolidone (NMP) was added to prepare a positive electrode mixture slurry. Then, the positive electrode mixture slurry was applied on both surfaces of aluminum foil with 15 µm in thickness, and the coating was dried. Thereafter, the coating was rolled by using a roller, and then cut to a predetermined electrode size (thickness: 0.144 mm, width: 62.6 mm, length: 861 mm) to produce a positive electrode in which positive electrode mixture layers were formed on both the surfaces of the positive electrode current collector. An exposed portion where the positive electrode mixture layer was not formed and the positive electrode current collector was exposed was provided on a central portion in a longitudinal direction of the positive electrode, and a positive electrode lead made of aluminum was welded with this exposed portion.

### [Production of Negative Electrode]

Mixing 95 parts by mass of a graphite powder, 5 parts by mass of a Si oxide, 1 part by mass of sodium carboxymethylcellulose (CMC-Na), and 1 part by mass of a dispersion of styrene-butadiene rubber (SBR) was performed, and an appropriate amount of water was added to prepare a negative electrode mixture slurry. Then, the negative electrode mixture slurry was applied on both surfaces of copper foil with 8 µm in thickness, and the coating was dried. Thereafter, the coating was rolled by using a roller, and then cut to a predetermined electrode size to produce a negative electrode in which negative electrode mixture layers were formed on both the surfaces of the negative electrode current collector. An exposed portion where the negative electrode mixture layer was not formed and the negative electrode current collector was exposed was provided on one end in a longitudinal direction of the negative electrode (an end to be positioned on an inner side of winding of an electrode assembly), and a negative electrode lead made of nickel was welded with this exposed portion.

### [Production of Separator]

A porous substrate with 12 µm in thickness made of polyethylene was prepared. An α-Al₂O₃ powder having an average particle diameter (D50) of 0.8 µm and an acrylate ester-based binder emulsion was mixed at a solid-content mass ratio of 97:3, and then an appropriate amount of water was added so that the solid-content concentration was 10 mass% to prepare a first dispersion. The first dispersion was applied on an entire region of one surface of the substrate by using a micro gravure coater, the coating was heated and dried with an oven at 50°C for 4 hours to form a first inorganic particle layer with 4 µm in average thickness on the one surface of the substrate.

Furthermore, an α-Al₂O₃ powder having an average particle diameter (D50) of 0.3 µm and an acrylate ester-based binder emulsion was mixed at a solid-content mass ratio of 97:3, and then an appropriate amount of water was added so that the solid-content concentration was 10 mass% to prepare a second dispersion. The second dispersion was intermittently applied on a surface of the first inorganic particle layer with a micro gravure coater, the coating was heated and dried with an oven at 50°C for 4 hours to form a second inorganic particle layer with 3 µm in average thickness, and to produce a separator. The second dispersion was applied so that, when the positive electrode, the negative electrode, and the separator were wound to form an electrode assembly, the second inorganic particle layer was formed within a range of two windings in a winding direction from a position facing an inner winding end of the positive electrode mixture layer.

Friction coefficients of surfaces of the first inorganic particle layer and second inorganic particle layer were measured by the aforementioned method. The friction coefficient of the first inorganic particle layer was 0.4, and the friction coefficient of the second inorganic particle layer was 0.6.

### [Production of Electrode Assembly]

The positive electrode and the negative electrode were spirally wound with the separator interposed therebetween to produce a wound electrode assembly. At this time, the separator was disposed such that the first inorganic particle layer and the second inorganic particle layer faced the positive electrode mixture layer, and such that the second inorganic particle layer was on the inner side of winding of the electrode assembly. The number of windings of the electrode assembly was 18 on a basis of the positive electrode.

### [Preparation of Non-Aqueous Electrolyte]

Into 100 parts by mass of a mixed solvent in which ethylene carbonate (EC) and dimethyl carbonate (DMC) were mixed at a volume ratio of 3:7, 5 parts by mass of vinylene carbonate (VC) was added, and lithium hexafluorophosphate (LiPF₆) was dissolved at a concentration of 1.5 mol/L to prepare a non-aqueous electrolyte.

### [Production of Non-Aqueous Electrolyte Secondary Battery]

Insulating plates were respectively disposed on upper and lower sides of the electrode assembly, and the electrode assembly was housed in an exterior housing can. The negative electrode lead was welded with a bottom of the bottomed cylindrical exterior housing can, and the positive electrode lead was welded with a sealing assembly. The non-aqueous electrolyte was injected into the exterior housing can, then an opening of the exterior housing can was sealed with the sealing assembly via a gasket, and then left to stand in a thermostat chamber at 60°C for 15 hours to produce a non-aqueous electrolyte secondary battery. A capacity of the produced secondary battery was 4600 mAh.

### [Evaluation of Winding Deviation]

Ten of the electrode assemblies were produced, and flatness of an end of the separator on the upper surface of the electrode assembly was observed with a stereomicroscope. A case where a difference between the upper and lower sides of the separator end was greater than or equal to 0.3 mm was evaluated as occurrence of winding deviation of the electrode assembly. The number of electrode assemblies in which the winding deviation occurred was evaluated.

### [Evaluation of Electrode Plate Deformation]

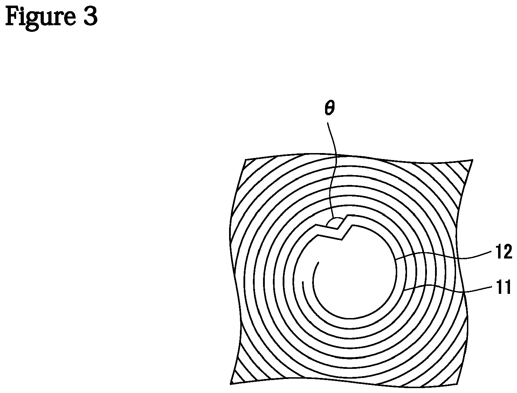

The non-aqueous electrolyte secondary battery was charged at a constant current of 1380 mA (0.3 It) until a battery voltage reached 4.2 V, and then charged at a constant voltage of 4.2 V until a current reached 92 mA (0.02 It). Thereafter, the non-aqueous electrolyte secondary battery was discharged at a constant current of 4600 mA (1.0 It) until the battery voltage reached 2.7 V. This charge-discharge cycle was performed with 500 cycles with providing rest times for 20 minutes between the cycles. The non-aqueous electrolyte secondary battery after the 500 cycles was charged at a constant current of 1380 mA (0.3 It) until the battery voltage reached 4.2 V, and then charged at a constant voltage of 4.2 V until the current reached 92 mA (0.02 It) to make a charged state. With this non-aqueous electrolyte secondary battery with the charged state, a cross section near the winding center of the electrode assembly was observed by using an X-ray CT device (SMX-225CT FPD HR, manufactured by SHIMADZU CORPORATION). As illustrated in FIG. 3, a case where deformation (bending) of an electrode plate (at least one of the positive electrode and the negative electrode) having an angle θ of less than or equal to 150° was observed was judged as presence of the electrode plate deformation. Presence or absence of the electrode plate deformation was evaluated.

### <Example 2>

An electrode assembly and a battery were produced and evaluated in the same manner as in Example 1 except that, in the production of the separator, the second inorganic particle layer was formed within a range of four windings in the winding direction from the position facing the inner winding end of the positive electrode mixture layer.

### <Example 3>

An electrode assembly and a battery were produced and evaluated in the same manner as in Example 1 except that, in the production of the separator, the α-Al₂O₃ powder used for the second dispersion was changed to an α-Al₂O₃ powder having D50 of 0.3 µm.

### <Comparative Example 1>

An electrode assembly and a battery were produced and evaluated in the same manner as in Example 1 except that, in the production of the separator, the second inorganic particle layer was not formed.

### <Comparative Example 2>

An electrode assembly and a battery were produced and evaluated in the same manner as in Example 1 except that, in the production of the separator, the second inorganic particle layer was formed within a range of six windings in the winding direction from the position facing the inner winding end of the positive electrode mixture layer.

### <Comparative Example 3>

An electrode assembly and a battery were produced and evaluated in the same manner as in Example 1 except that, in the production of the separator, the α-Al₂O₃ powder used for the first dispersion was changed to an α-Al₂O₃ powder having D50 of 0.2 µm, and the second inorganic particle layer was not formed.

Table 1 shows the evaluation results of the winding deviation and electrode plate deformation according to Examples and Comparative Examples. Table 1 also shows: the D50 and friction coefficient of the first inorganic particle layer; and the D50, friction coefficient, and range of the second inorganic particle layer.

**[Table 1]**

| | First inorganic particle layer | | Second inorganic particle layer | | | Winding deviation | Electrode plate deformation |
|---|---|---|---|---|---|---|---|
| | D50 [um] | Friction coefficient | D50 [um] | Friction coefficient | Range | | |
| Example 1 | 0.8 | 0.4 | 0.3 | 0.6 | 2 windings | 0/10 | Absent |
| Example 2 | 0.8 | 0.4 | 0.3 | 0.6 | 4 windings | 0/10 | Absent |
| Example 3 | 0.8 | 0.4 | 0.2 | 0.7 | 2 windings | 0/10 | Absent |
| Comparative Example 1 | 0.8 | 0.4 | - | | | 0/10 | Present |
| Comparative Example 2 | 0.8 | 0.4 | 0.3 | 0.6 | 6 windings | 3/10 | Absent |
| Comparative Example 3 | 0.2 | 0.7 | - | | | 8/10 | Absent |

As found from the evaluation results in Table 1, Examples 1 to 3 inhibit the winding deviation and the electrode plate deformation. Meanwhile, the electrode plate deformation occurs in Comparative Example 1, and the winding deviation occurs in Comparative Examples 2 and 3.

### REFERENCE SIGNS LIST

10 secondary battery, 11 positive electrode, 11a positive electrode current collector, 11b positive electrode mixture layer, 11e inner winding end, 12 negative electrode, 12a negative electrode current collector, 12b negative electrode mixture layer, 13 separator, 13a substrate, 13b first inorganic particle layer, 13c second inorganic particle layer, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket

## Claims

1. A non-aqueous electrolyte secondary battery, comprising:
an electrode assembly in which a positive electrode and a negative electrode are wound with a separator interposed therebetween; and
an exterior housing the electrode assembly, wherein
the positive electrode has a positive electrode current collector and a positive electrode mixture layer formed on a surface of the positive electrode current collector, and
a surface of the separator facing the positive electrode mixture layer includes: a high-friction region formed within a range of two or more windings and less than six windings in a winding direction from a position facing an inner winding end of the positive electrode mixture layer; and a low-friction region adjacent to the high-friction region in the winding direction.

2. The non-aqueous electrolyte secondary battery according to claim 1, wherein a friction coefficient of the high-friction region is greater than or equal to 0.6.

3. The non-aqueous electrolyte secondary battery according to claim 1 or 2, wherein a friction coefficient of the low-friction region is less than or equal to 0.4.

4. The non-aqueous electrolyte secondary battery according to any one of claims 1 to 3, wherein the separator includes, at least on a surface facing the positive electrode mixture layer, an inorganic particle layer including inorganic particles.

5. The non-aqueous electrolyte secondary battery according to claim 4, wherein an average particle diameter of the inorganic particles included in the high-friction region is less than or equal to 0.3 µm.
